# EUROPÄISCHE PATENTANMELDUNG

(11) **EP 0 911 714 A1**
(43) Veröffentlichungstag der Anmeldung: **28.04.1999**
(21) Anmeldenummer: 97118122.7
(22) Anmeldetag: 20.10.1997
(51) Int. Cl.: G05D 7/01, F24D 19/10

(54) **Durchfluss-Regelventil mit integriertem Druckregler**

(71) Anmelder: Electrowatt Technology Innovation AG, 6301 Zug (CH)
(72) Erfinder: Wild, Willi, 6319 Allenwinden (CH); Merz, siegfried, 8911 Rifferswil (CH)

(57) **Zusammenfassung**

Ein Durchfluss-Regelventil weist zwei nacheinander angeordnete Drosselstellen auf. Die erste Drosselstelle dient als Verstellorgan für den Durchfluss. Die zweite Drosselstelle regelt die Druckdifferenz über der ersten Drosselstelle auf einen konstanten Wert. Die erste Drosselstelle ist gebildet von einem Regelkegel (4), der mit einem ersten Ventilsitz (5) eines mit dem Ventilgehäuse (6) fest verbundenen Ventileinsatzes (7) zusammenwirkt. Die zweite Drosselstelle ist gebildet von einem Druckregulierkegel (9), der mit einem zweiten Ventilsitz (10) des Ventileinsatzes (7) zusammenwirkt. Der Regelkegel (4) und der Druckregulierkegel (9) sind in einer gleichen Richtung (12) verschiebbar und mittels einer elastischen Membrane (13) verbunden. Der Einlassraum (1) ist mit einer Druckkammer (15) verbunden, die auf die Membrane (13) und auf den Druckregulierkegel (9) einwirkt. Die wirksame Fläche, die den im Einlassraum (1) herrschenden Druck p₁ auf den Druckregulierkegel (9) überträgt ist annähernd gleich der wirksamen Fläche, die den zwischen den beiden Drosselstellen herrschenden Druck p₂ auf den Druckregulierkegel (9) überträgt.

## Beschreibung

Die Erfindung betrifft ein Durchfluss-Regelventil mit integriertem Druckregler der im Oberbegriff des Anspruchs 1 genannten Art.

Solche Durchfluss-Regelventile eignen sich gemäss der Lehre des europäischen Patentes EP 677 708 beispielsweise zur Verwendung als Heizkörperventile in einer Warmwasserheizung, bei der mehrere Heizkörpern in wenigstens einem Strang hydraulisch zusammengeschlossen sind. Mit solchen Durchfluss-Regelventilen können die einzelnen Heizkörper unabhängig vom jeweils vorherrschenden, durch den Betrieb der anderen Heizkörper beeinflussten Druckabfall mit gleichbleibender Heizleistung betrieben werden.

Ein Durchfluss-Regelventil der im Oberbegriff des Anspruchs 1 genannten Art ist aus der europäischen Patentanmeldung EP 751 448 bekannt. Dieses relativ grosse Ventil ist für den Einsatz als Heizkörperventil nicht geeignet.

Aus der französischen Patentanmeldung FR 2 740 544 ist ein Ventil mit einer einzigen Drosselstelle bekannt, bei dem die Durchflussmenge annähernd unabhängig vom Druckabfall ist. Eine Verstellmöglichkeit zur Verstellung des Nenndurchflusses ist aber nicht gegeben.

Der Erfindung liegt die Aufgabe zugrunde, ein Durchfluss-Regelventil vorzuschlagen, das kompakte Abmessungen aufweist und für den Einsatz als Heizkörperventil geeignet ist.

Die Erfindung besteht in den im Anspruch 1 angegebenen Merkmalen. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Schnittzeichnung eines Durchfluss-Regelventils mit zwei Drosselstellen,
- Fig. 2: eine besondere Ausgestaltung der ersten Drosselstelle,
- Fig. 3: einen Ausschnitt der ersten Drosselstelle im Querschnitt,
- Fig. 4: eine Bohrung zur Lagerung einer Spindel im Querschnitt, und
- Fig. 5: eine Schnittzeichnung des Durchfluss-Regelventils, das sich zum einfachen Einbau in ein Radiatorgestänge eignet.

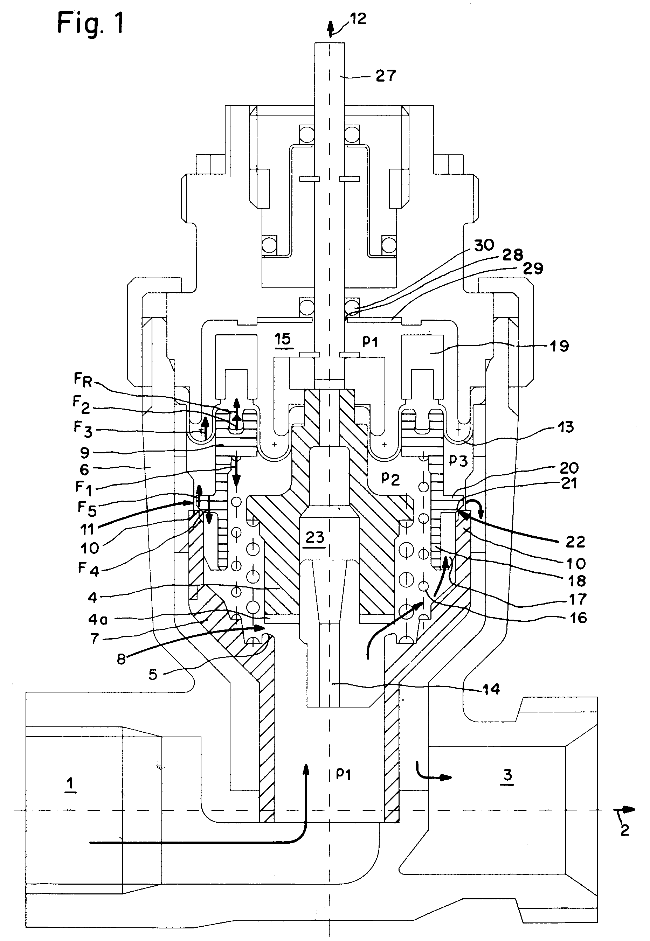

Die Fig. 1 zeigt ein Durchfluss-Regelventil, durch dessen Einlassraum 1 das in x-Richtung 2 fliessende Strömungsmedium in das Durchfluss-Regelventil eintritt und durch dessen Auslassraum 3 das Strömungsmedium das Durchfluss-Regelventil in gleicher x-Richtung 2 wieder verläßt, wie dies auch durch Pfeile dargestellt ist. Zwischen dem Einlassraum 1 und dem Auslassraum 3 befinden sich zwei in Reihe geschaltete Drosselstellen. Die erste Drosselstelle wird gebildet von einem Regelkegel 4, der mit einem ersten Ventilsitz 5 eines mit dem Ventilgehäuse 6 fest verbundenen Ventileinsatzes 7 zusammenwirkt zur Bildung einer ersten verstellbaren Öffnung 8. Der Regelkegel 4 weist ein Dichtungselement 4a auf, damit die Öffnung 8 im geschlossenen Zustand des Durchfluss-Regelventils dicht schliesst. Die zweite Drosselstelle wird gebildet von einem Druckregulierkegel 9, der mit einem zweiten Ventilsitz 10 des Ventileinsatzes 7 zusammenwirkt zur Bildung einer zweiten verstellbaren Öffnung 11.

Der Druck im Einlassraum ist mit p₁, der Druck zwischen den beiden Drosselstellen mit p₂ und der Druck im Auslassraum mit p₃ bezeichnet. Die erste Drosselstelle dient als Verstellorgan für den Durchfluss, während die Funktion der zweiten Drosselstelle darin besteht, die Druckdifferenz p₁-p₂ über der ersten Drosselstelle konstant zu halten, damit der Durchfluss unabhängig von der über dem Durchfluss-Regelventil herrschenden Druckdifferenz p₁-p₃ ist.

Das Strömungsmedium durchströmt das Durchfluss-Regelventil in x-Richtung 2. Der Regelkegel 4 und der Druckregulierkegel 9 sind entlang einer senkrecht zur x-Richtung 2 gerichteten y-Richtung 12 verschiebbar. Die y-Lage des Regelkegels 4 bestimmt den Öffnungsgrad der ersten Öffnung 8 und damit den Durchfluss. Der Regelkegel 4 wird von einem Sollwertsteller, z.B. einem ferngesteuerten elektromotorischen Antrieb oder einem thermostatischen Antrieb betätigt. Der Druckregulierkegel 9 ist über eine elastische Membrane 13 sowohl mit dem Regelkegel 4 als auch mit dem Ventilgehäuse 6 verbunden. Die Membrane 13 ist Teil eines hydraulischen Antriebes, der die Lage des Druckregulierkegels 9 bezüglich des zweiten Ventilsitzes 10 und damit den Grad der zweiten Öffnung 11 steuert. Diese Steuerung wird dadurch ermöglicht, dass auf die Membrane 13 einerseits der Eingangsdruck p₁ und andererseits der zwischen den Drosselstellen wirkende Druck p₂ wirken. Um diese Wirkung zu erreichen ist der Einlassraum 1 über eine im Regelkegel 4 angebrachte Bohrung 14 mit einer Druckkammer 15 verbunden, die auf die Membrane 13 und auf den Druckregulierkegel 9 einwirkt. Der Druck p₁ übt somit eine in negativer y-Richtung 12 wirkende Kraft F₁ aufden Druckregulierkegel 9 aus. Andererseits übt der Druck p₂ eine in positiver y-Richtung 12 wirkende Kraft F₂ auf den Druckregulierkegel 9 aus. Die wirksame Fläche, an der der Druck p₁ an der Membrane 13 oder am Druckregulierkegel 9 angreift ist gleich der wirksamen Fläche bemessen, an der der Druck p₂ an der Membrane 13 oder am Druckregulierkegel 9 angreift. Die resultierende Kraft F₁-F₂ ist daher direkt proportional zum Differenzdruck p₁-p₂. Eine zwischen dem Ventileinsatz 7 und dem Druckregulierkegel 9 eingespannte Reglerfeder 16 übt eine in positiver y-Richtung 12 auf den Druckregulierkegel 9 wirkende Kraft F_{R} aus. Der Öffnungsgrad der Öffnung 11 stellt sich so ein, dass die Kräfte F₁-F₂ und F_{R} gleich gross sind.

Die elastische Membrane 13 ermöglicht eine praktisch reibungsfreie Bewegung sowohl des Regelkegels 4 als auch des Druckregulierkegels 9 entlang der y-Richtung 12. Die Führung des Druckregulierkegels 9 in y-Richtung wird durch Flügel 17 gewährleistet, die mit dem Ventileinsatz 7 zusammenwirken. Der Druckregulierkegel 9 weist bevorzugt einen parallel zur y-Richtung 12 ausgebildeten Zylindermantel 18 auf, der die Flügel 17 verbindet, so dass zwischen den Flügeln 17 kleine Strömungskammern gebildet sind. Jede Bewegung des Druckregulierkegels 9 in x-Richtung 2 führt nun dazu, dass einige der Strömungskammern kleiner und andere grösser werden. Die dabei nötige Umverteilung des Strömungsmediums ist aber erschwert, da die Strömungskammern das Strömen des Strömungsmediums in x-Richtung 2 stark erschweren. Schwingungen des Druckregulierkegels 9 werden auf diese Weise stark gedämpft, wenn nicht gar verhindert. Mittels eines auf den Druckregulierkegel 9 aufgesetzten Messingringes 19 kann die Masse des Druckregulierkegels 9 erhöht und damit die Resonanzfrequenz der möglichen Schwingungen erniedrigt werden. Dadurch liegt die Resonanzfrequenz tiefer als die durch die Strömung erzeugten Erregerfrequenzen.

Der Druck p₃ greift auch an der Membrane 13 an und übt eine in positiver y-Richtung 12 auf den Druckregulierkegel 9 wirkende Kraft F₃ aus. Zur Kompensation dieser Kraft F₃ weist der Druckregulierkegel 9 einen Fortsatz 20 auf, an dem der Druck p₃ derart angreift, dass auf den Druckregulierkegel 9 auch eine in negativer y-Richtung 12 gerichtete Kraft F₄ wirkt. Zu beachten ist hier, dass der Druck p₃ auch im Bereich des zweiten Ventilsitzes 10 am Fortsatz 20 angreift und eine ebenfalls in positiver y-Richtung 12 auf den Druckregulierkegel 9 wirkende Kraft F₅ ausübt. Die wirksame Fläche dieses Fortsatzes 20 ist gleich der wirksamen Fläche bemessen, an der der Druck p₃ auf die Membrane 13 einwirkt, damit sich die Kräfte F₃, F₄ und F₅ gegenseitig kompensieren. Der Druck p₃ im Auslassraum 3 hat dann keinen Einfluss auf die Lage des Druckregulierkegels 9.

Der Druckregulierkegel 9 weist im Bereich des zweiten Ventilsitzes 10 eine kegelförmige Fläche 21 auf, die im Querschnitt als schräge Kante erscheint. Der zweite Ventilsitz 10 ist scharfkantig ausgebildet, wobei die Kante 22 die kegelförmige Fläche 21 des Druckregulierkegels 9 entlang einer kreisrunden Linie dann berührt, wenn die zweite Drosselstelle geschlossen ist. Im unmittelbaren Bereich der Öffnung 11 ist die für den Durchfluss wirksame Querschnittsfläche am geringsten, deshalb ist dort die Strömungsgeschwindigkeit des Strömungsmediums am höchsten. Gemäss dem Gesetz von Bernoulli vermindert sich daher dort der Druck. Dies hat zur Folge, dass in unmittelbarer Nähe der Öffnung 11 nicht der Druck p₂ bzw. p₃, sondern ein gegenüber dem Druck p₂ bzw. p₃ verminderter Druck auf den Druckregulierkegel 9 einwirkt. Dies hat eine Verkleinerung der auf den Druckregulierkegel 9 insgesamt einwirkenden Kraft F₂ zur Folge. Die Verkleinerung der Kraft F₂ kann teilweise über eine entsprechende Vergrösserung der Fläche, an der der Druck p₂ am Druckregulierkegel 9 angreift, kompensiert werden. Da die Verkleinerung der Kraft F₂ innerhalb des Arbeitsbereiches des Durchlass-Regelventils nun aber nicht konstant ist, sondern vom Öffnungsgrad der Öffnung 11 abhängt, bleibt eine leichte Abhängigkeit des Durchflusses von der über dem Durchlass-Regelventil herrschenden Druckdifferenz p₁-p₃ übrig. Wäre jedoch der Ventilsitz 10 nicht wie beschrieben scharfkantig ausgebildet, sondern mit einer zur kegelförmigen Fläche 21 parallel ausgebildeten Fläche versehen, dann wäre der Bereich, wo nicht mehr der Druck p₂ sondern ein kleinerer Druck am Druckregulierkegel 9 angreift, noch grösser. Damit wäre auch die Abhängigkeit des Durchflusses von der über dem Durchlass-Regelventil herrschenden Druckdifferenz p₁-p₃ ausgeprägter.

Die infolge der Strömung verursachte Verminderung des auf den Fortsatz 20 wirkenden Druckes p₃ äussert sich in einer Verkleinerung der Kraft F₅. Die Verkleinerung der Kraft F₅ ist abhängig von der Strömungsgeschwindigkeit und somit vom Durchfluss. Um diesen Effekt so gering wie möglich zu halten, erstreckt sich der Fortsatz 20 in radialer Richtung möglichst wenig über den durch die innere Kante definierten Ventilsitz 10 hinaus, d.h. nur soviel, wie infolge unvermeidbarer Toleranzen nötig ist.

Innerhalb des Regelkegels 4 ist eine Kammer 23 vorgesehen, deren Volumen im Idealfall mindestens so gross, vorteilhaft wenigstens halb so gross, wie die durch eine volle Hubänderung bewirkte Volumenänderung der Druckkammer 15. Bei einer Hubbewegung des Regelkegels 4 oder des Druckregulierkegels 9 ändert sich das Volumen der Druckkammer 15, infolgedessen ein Austausch an Strömungsmedium zwischen der Druckkammer 15 und dem Einlassraum 1 stattfinden müsste. Die Kammer 23 kann dieses mehr oder weniger an Strömungsmedium ganz oder wenigstens teilweise aufnehmen, sodass nur bei grossen Hubänderungen des Regelkegels 4 ein Austausch zwischen der Druckkammer 15 und dem Einlassraum 1 stattfindet. Die Gefahr einer Verschmutzung der Druckkammer 15 oder der Bohrung zwischen der Kammer 23 und der Druckkammer 15 ist damit reduziert.

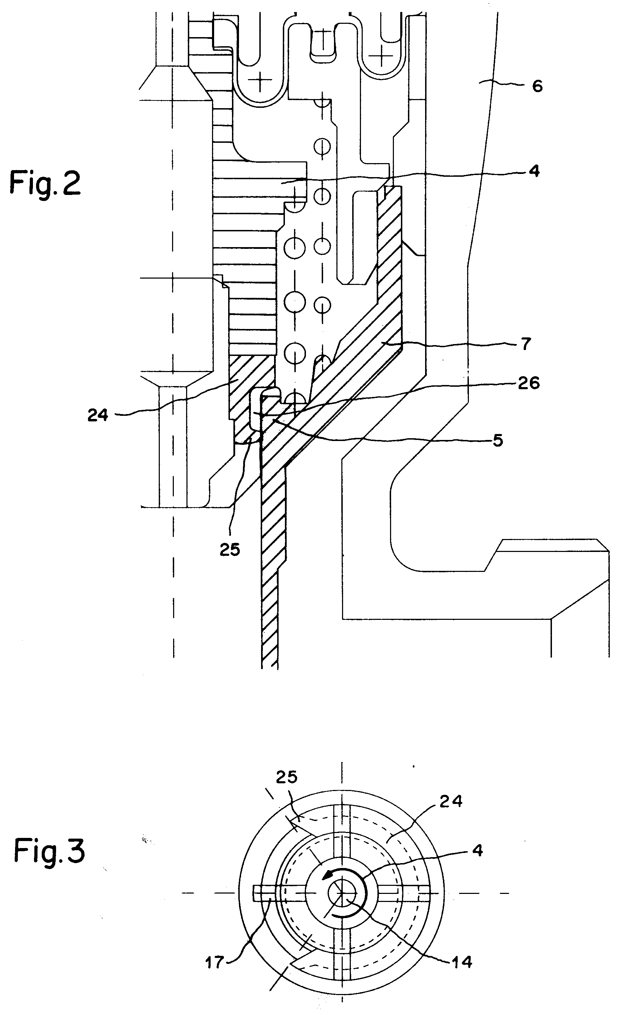

In der Fig. 2 ist die zweite Drosselstelle grösser dargestellt als in der Fig. 1, weshalb die Details der Formgebung hier besser ersichtlich sind. Die Fig. 2 zeigt nun weiter eine Ausgestaltung der ersten Drosselstelle, bei der auf den Regelkegel 4 ein Gummiteil 24 aufgesetzt ist, das mit dem ersten Ventilsitz 5 zusammenwirkt. Das Gummiteil 24 weist eine Dichtlippe 25 auf, die seitlich am ersten Ventilsitz 5 anliegt und damit die Abdichtung gewährleistet. Die Dichtlippe 25 umspannt, wie in der Fig. 3 gezeigt ist, einen beliebigen Winkel Φ, der beispielsweise 120° oder 270° betragen kann, und begrenzt daher den Durchfluss durch die erste Drosselstelle sektoriell. Der Öffnungsquerschnitt der ersten Drosselstelle hängt ab vom Hub des Regelkegels 4 und vom Umfang der sich bildenden Spaltöffnung. Mit der Dichtlippe 25 wird der Umfang der Spaltöffnung und damit die Durchflussmenge in Funktion des Hubes verkleinert. Vorteilhaft bei dieser Lösung ist, dass der Bereich, in dem die Durchflussmenge regelbar ist, nach unten erweitert ist und dass die Verstopfungsgefahr durch Staub- und Schmutzpartikel reduziert ist. Die Dichtlippe 25 ist schmal ausgebildet und weist an ihren beiden Enden einen Hinterschnitt auf. Damit soll bei einer allfälligen Quellung des Gummiteils 24 gewährleistet werden, dass die Drosselstelle voll tunktionsfähig bleibt: Die bei einer Hubänderung des Regelkegels 4 wirkende Kraft reicht entweder aus, dass die Dichtlippe 25 die Hubänderung problemlos mitmacht oder dass allein der Regelkegel 4 die Hubänderung vollzieht, wobei sich dann allerdings die am Ventilsitz 5 haftende Dichtlippe 25 verformt. Oberhalb der Dichtlippe 25 ist ein relativ grosser Hohlraum 26 (Fig. 2) vorgesehen, damit allfällige Ablagerungen von Schmutz oder Kalk nicht ein Festsitzen des Gummiteils 24 bewirken können.

Das Gummiteil 24 besteht aus wasserbeständigem Gummi. Bei einer Verschmutzung des durch das Durchfluss-Regelventil fliessenden Mediums mit Öl kann es daher vorkommen, dass das Gummiteil 24 aufquillt. Die beschriebene Konstruktion gewährleistet, dass das Durchfluss-Regelventil trotzdem zuverlässig arbeitet.

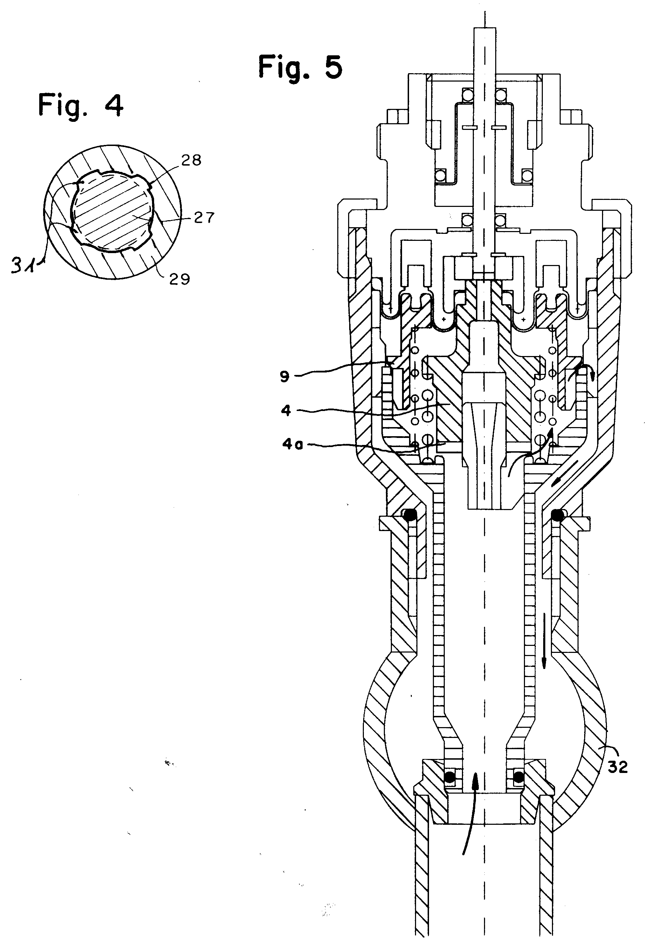

Der Regelkegel 4 ist mit einer Spindel 27 verbunden, die manuell oder von einem nicht dargestellten Antrieb betätigbar ist zur Einstellung der Öffnung 8. Die Spindel 27 ist durch eine Bohrung 28 in einem Lagerteil 29 geführt, die der Führung und der Lagerung der Spindel 27 dient. Zur Abdichtung der Druckkammer 15 gegen aussen dient ein O-Ring 30. Die Fig. 4 zeigt die Bohrung 28 im Querschnitt. Die Bohrung 28 ist nun nicht kreisrund, sondern sie weist von der kreisrunden Form radial gegen aussen gerichtete Ausnehmungen 31 auf, so dass zwischen der Spindel 27 und dem Lagerteil 29 mehrere Spalte verbleiben, durch die das Medium, in der Regel Heizungswasser, jederzeit zwischen beiden Seiten des Lagerteils 29 frei zirkulieren kann. Dadurch wird ein Auskristallisieren fester Bestandteile in der Bohrung 28 und damit ein Festsitzen der Spindel 27 verhindert. Die Bohrung 28 ist trotzdem derart gestaltet, dass die einwandfreie Führung der Spindel 27 wie bei einer kreisrunden Bohrung gewährleistet ist.

Die Fig. 5 zeigt eine Ausführung des Durchfluss-Regelventils, das sich zum einfachen Einbau in ein Radiatorgestänge 32 eignet. Bei diesem Ventil erfolgt die Zuleitung und die Ableitung des Heizwassers koaxial entlang der Richtung 12, in der der Regelkegel 4 und der Druckregulierkegel 9 verschiebbar sind.

## Patentansprüche

1. Durchfluss-Regelventil mit einem Einlassraum (1), zwei nacheinander angeordneten Drosselstellen und einem Auslassraum (3), wobei die erste Drosselstelle als Verstellorgan für den Durchfluss dient und wobei die Druckdifferenz über der ersten Drosselstelle mittels der zweiten Drosselstelle auf einen konstanten Wert regelbar ist, **dadurch gekennzeichnet, dass**
a) die erste Drosselstelle gebildet ist von einem Regelkegel (4), der mit einem ersten Ventilsitz (5) eines mit dem Ventilgehäuse (6) fest verbundenen Ventileinsatzes (7) zusammenwirkt;
b) die zweite Drosselstelle gebildet ist von einem Druckregulierkegel (9), der mit einem zweiten Ventilsitz (10) des Ventileinsatzes (7) zusammenwirkt;
c) der Regelkegel (4) und der Druckregulierkegel (9) in einer gleichen Richtung (12) verschiebbar sind;
d) der Regelkegel (4) und der Druckregulierkegel (9) mittels einer elastischen Membrane (13) verbunden sind;
e) der Einlassraum (1) mit einer Druckkammer (15) verbunden ist, die auf die Membrane (13) und auf den Druckregulierkegel (9) einwirkt;
f) die wirksame Fläche, die den im Einlassraum (1) herrschenden Druck p₁ auf den Druckregulierkegel (9) überträgt annähernd gleich der wirksamen Fläche ist, die den zwischen den beiden Drosselstellen herrschenden Druck p₂ auf den Druckregulierkegel (9) überträgt.

2. Durchfluss-Regelventil nach Anspruch 1, **dadurch gekennzeichnet, dass** der Druckregulierkegel (9) derart ausgebildet ist, dass sich die Kräfte gegenseitig kompensieren, die durch den im Auslassraum (3) herrschenden Druck p₃ auf die Membrane (13) und den Druckregulierkegel (9) ausgeübten werden, damit der Druck p₃ keine resultierende Kraft auf den Druckregulierkegel (9) bewirkt.

3. Durchfluss-Regelventil nach Anspruch 1 oder 2, **dadurch gekennzeichnet, dass** der Druckregulierkegel (9) mit dem Ventileinsatz (7) Strömungskammern bildet zur Unterdrückung von Schwingungen des Druckregulierkegels (9).

4. Durchfluss-Regelventil nach Anspruch 3, **dadurch gekennzeichnet, dass** Mittel (19) zur Erhöhung der Masse des Druckregulierkegels (9) vorhanden sind.

5. Durchfluss-Regelventil nach einem der Ansprüche 1 bis 4, **dadurch gekennzeichnet, dass** die zweite Drosselstelle (9, 10) gebildet ist durch eine kegelförmige Fläche, die mit einem scharfkantigen Gegenstück zusammenwirkt, damit die infolge der Strömung gemäss dem Gesetz von Bernoulli bewirkte Verkleinerung des auf den Druckregulierkegel (9) einwirkenden Druckes möglichst gering ist.

6. Durchfluss-Regelventil nach einem der Ansprüche 1 bis 5, **dadurch gekennzeichnet, dass** der Regelkegel (4) ein Gummiteil (24) aufweist, das mit dem ersten Ventilsitz (5) die erste Drosselstelle bildet, wobei das Gummiteil (24) eine Dichtlippe (25) aufweist, die den Durchfluss durch die erste Drosselstelle sektoriell begrenzt.

7. Durchfluss-Regelventil nach einem der Ansprüche 1 bis 6, **dadurch gekennzeichnet, dass** der Regelkegel (4) eine Kammer (23) aufweist, deren Volumen wenigstens halb so gross ist wie die durch eine volle Hubänderung bewirkte Volumenänderung der Druckkammer (15).

8. Durchfluss-Regelventil nach einem der Ansprüche 1 bis 7, **dadurch gekennzeichnet, dass** der Regelkegel (4) mit einer manuell oder von einem Antrieb betätigbaren Spindel (27) verbunden ist, dass die Spindel (27) durch eine Bohrung (28) eines Lagerteils (29) geführt ist und dass die Bohrung (28) nicht kreisrund ist.
